# EUROPEAN PATENT APPLICATION

(11) **EP 4 675 882 A1**
(43) Date of publication of application: **07.01.2026**
(21) Application number: 24185720.0
(22) Date of filing: 01.07.2024
(51) Int. Cl.: H02J 7/00, B25F 5/00

(54) **A METHOD TO CREATE A USAGE HISTORY OF A POWER TOOL ON AN ASSET MANAGEMENT PLATFORM, A POWER TOOL SYSTEM, AND AN ASSET MANAGEMENT PLATFORM**

(71) Applicant: Hilti Aktiengesellschaft, 9494 Schaan (LI)
(72) Inventor: Malik, Muhammad Salman, 86159 Augsburg (DE); Matanovic, Josip, 80634 München (DE); Srinivasan Ravikumar, Harishkumar, 81673 München (DE)
(74) Representative: Hilti Aktiengesellschaft Corporate Intellectual Property

(57) **Abstract**

A method to create a usage history of a power tool on an asset management platform, comprising the steps of: attaching a first battery to the power tool; generating usage information of the power tool on the first battery; storing the usage information of the power tool on the first battery; associating time information from a battery clock to the usage information of the power tool; and transferring the usage information with the associated time information from the first battery to the asset management platform.

## Description

### FIELD OF INVENTION

The present invention relates to a method to create a usage history of a power tool on an asset management platform, to a power tool system and an asset management platform, and to a computer program product to carry out the method.

### BACKGROUND OF THE INVENTION

In asset management systems for power tools, power tools often create their own data, e.g., data on their cumulative usage, e.g., the total cumulative runtime of a power tool. The total cumulative runtime of a power tool may be used for calculating when the next service of a power tool is necessary. For various use cases, e.g., for optimization of the use of power tools on construction sites, it is advantageous, if power tools can create a usage history, e.g., on which days a specific power tool has been used or, additionally, the amount per day a power tool is used.

Not all power tools are equipped with real time clocks to add a timestamp, indicating, e.g., day, month, year, time and/or time zone to their data. Additionally, not all power tools are equipped with the necessary hardware and/or capabilities, e.g., memory or edge computing, to create their own daily usage history or daily usage intensity history. For cumulative usage a relative measurement, e.g., that the runtime of the power tool is a number of seconds or minutes, and summing up the runtime may be sufficient. Additionally, not all power tools are equipped with the necessary communication means to send usage history information to an asset management platform.

Therefore, it is one object of the invention to provide for an improved method for creating a usage history of a power tool on an asset management platform.

### DISCLOSURE OF THE INVENTION

A method to create a usage history of a power tool on an asset management platform is proposed, the method comprising the steps of: attaching a first battery to the power tool; generating usage information of the power tool on the first battery; storing the usage information of the power tool on the first battery; associating time information from a battery clock to the usage information of the power tool; and transferring the usage information with the associated time information from the first battery to the asset management platform.

By using a battery for generating usage information of a power tool, the capabilities of the power tool regarding a clock, memory, connectivity, and/or computing power may be reduced. Power tools not equipped with such capabilities may be integrated in an asset management system and their usage history may be created by using batteries with such capabilities. The method may work in embodiments where the only information transferred from the power tool to the battery is an identifier of the power tool. In a minimal setup of only one power tool, e.g., with batteries known to be connected only to the one power tool on a jobsite, no information from the power tool may be necessary, beyond the power consumption of the one power tool, to perform the method.

The power tool may be, e.g., a saw, a driver, a wrench, a rotary hammer, a drill, or a screwdriver. Power tools are often supplied with power by exchangeable battery packs, often called just batteries. The batteries are charged from time to time at chargers. Battery powered power tools are frequently also called cordless power tools.

For various use cases, e.g., for optimization of the use of power tools on construction sites and/or for scheduling maintenance, it is advantageous, if the usage history of power tools is known or can be accessed by an asset management platform. A usage history may comprise operational and/or statistical data, e.g., runtime, application count, and/or frequency of events and/or errors. Particularly, a usage history of a power tool may comprise information, e.g., on which days a specific power tool has been used or, additionally, the amount per day a power tool is used.

An asset management platform may be used to manage a plurality of power tools and their accessories, e.g., chargers and/or batteries. The power tools and accessories may be distributed over various jobsites at various locations, e.g., in different time zones. An asset management platform may be hosted in a cloud, on a server, or as a local application.

When a battery is attached to a power tool, in addition to the power supply lines, also data lines may be established between the power tool and the battery. There may be also a wireless communication of the battery with the power tool, the battery is attached to. Usage information of the power tool may be generated on the battery by transferring data from the power tool to the battery and/or by evaluating the discharge of the battery by the power tool.

By having a clock on a battery, which may be used to supply a power tool, it is not necessary to have a clock on the power tool itself, as the battery may associate time information to the usage information of the power tool, e.g., the battery may store the usage information in relation to time information, e.g., in a table for each day, or the battery may add a time stamp to the usage information. The clock may be a relative clock, e.g., reset at each connection of the battery to the patent asset management system, or it may be a real time clock. The generated usage information is stored together with the time information on the battery.

A battery may use various ways, further discussed in the embodiments, to transfer the usage information and the time information to an asset management platform.

In a further embodiment, generating the usage information of the power tool on the first battery is comprising transferring usage data from the power tool to the first battery.

As described above, wireless and/or wired data lines may be established when a battery is attached to a power tool. The power tool may transfer an identifier, e.g., an identification number of the power tool to the battery. The power tool may transfer data about a start of use of the power tool, about a stop of use of the power tool, and/or about a duration of use, if the power tool comprises a power tool clock, to the battery. The battery then may generate and store usage information, comprising the usage data from the power tool or being derived from the usage data of the power tool. The battery may associate one or more time stamps to the usage information from the battery clock.

In a further embodiment, generating the usage information of the power tool on the first battery is comprising evaluating a discharge of the first battery by the power tool and/or a current supplied to the power tool.

A battery may generate usage information of a power tool by evaluating the current supplied to the power tool and/or the discharge of the battery, e.g., by current, power, and/or voltage measurements. E.g., an increase, e.g., above a predefined first threshold, in power consumption by the power tool, e.g., an increase of the current drawn by the power tool from the battery, may indicate a start of use of the power tool, similarly, a decrease, e.g., below a predefined second threshold, may indicate a stop of use. A pattern in the current supplied and/or the discharge of the battery, may also give indications on the type of power tool. From the data, durations of use may be derived. The battery may store the usage information. The battery may associate one or more time stamps to the usage information from the battery clock.

In a further embodiment, the battery clock is a real time clock and/or the battery has time zone information.

A real time clock can be integrated into a battery. A real time clock is a clock which is able to not only provide relative information on time, e.g., such as how long a time period is; however, a real time clock may provide information on the current date, the current time and/or the current time zone. A real time clock may also operate under the coordinated universal time (UTC). Often a real time clock is implemented as integrated circuit, often with a quartz resonator and with a separate power source, e.g., a super capacitor, which is charged from time to time. There are also software real time clocks, which may be implemented in embedded systems. A real time clock may be synchronized and/or may receive time zone information via wireless, e.g., cellular, connectivity of the battery or by plugging the battery to a charger which is connected, e.g., to the asset management system, via a wireless or wired connection between the battery and the charger to which the battery is plugged. The real time clock may be synchronized and/or may receive time zone information also via GPS.

In a further embodiment, transferring the usage information with the associated time information from the first battery to the asset management platform is comprising transferring the usage information with the associated time information by wireless connectivity, in particular cellular connectivity, of the first battery.

A battery may transfer, e.g., via a cellular module and/or via a WiFi or WLAN module, usage information with associated time information. The usage information with the associated time information may be transferred over one or more networks, e.g., from the battery via a WiFi or WLAN network to a telecommunications network, to an asset management platform.

In a further embodiment, transferring the usage information with the associated time information from the first battery to the asset management platform is comprising transferring the usage information with the associated time information to a charger.

Particularly, transferring the usage information with the associated time information from the first battery to the asset management platform may comprise the steps: detaching the first battery from the power tool; plugging the first battery to a charger for charging; transferring the usage information with the associated time information via a wireless or wired connection between the first battery and charger to which the first battery is plugged; forwarding the usage information with the associated time information via a wireless or wired connection from the charger to the asset management platform.

E.g., if a battery does not have a cellular module or a WLAN module, the battery may transfer usage information with associated time information to a charger, when the battery is plugged to the charger. The transfer may be via a wired connection or via a wireless connect, e.g., a near field communication module. The charger may store the usage information with the associated time information and/or transfer the usage information with the associated time information to an asset management platform via a wireless or wired connection, e.g., cellular connectivity and/or a gateway to a telecommunications network.

In a further embodiment, the usage information with the associated time information is comprising information on usage and/or non-usage of the power tool on one or more specific days, a period of usage on one or more specific days, and/or a cumulative usage on one or more specific days.

Usage information with associated time information may be simply information that a power tool has been used on a specific day, or that the tool has not been used on a specific day. The usage information may comprise information such as durations of use on a day or information on cumulative use. An asset management platform may derive, e.g., from daily data of cumulative use a usage history. The usage information with the associated time information may also include further information, e.g., an identifier, particularly an identification number, of the power tool. The usage information may also comprise information that the usage was not or cannot be determined for one or more specific days.

In a further embodiment, the first battery associates time information to each generated usage information, to the usage information of one day, and/or wherein the time information comprises information on a beginning of a use of the power tool, a stop of the use of the power tool, and/or a duration of the use of the power tool.

Time stamps may be used in various ways as time information. E.g., a battery may detect that a power consumption of a power tool, the battery is attached to, is increasing above a predetermined threshold. The battery may set a use flag and associate information of day, month, and year as time stamp to the flag. The battery may also associate the information of day, month, year, and the time as time stamp. The battery may associate one time stamp with the information of day, month, and year to a plurality of uses on that day, e.g., by storing use data, including data on non-usage, for each day the battery is attached to the power tool. E.g., the battery may generate usage information for each day and store this usage information related to the respective day.

In a further embodiment, the method is further comprising the step of aggregating on the asset management platform the usage information with the associated time information from the first battery with usage information with associated time information from a second battery.

Batteries are regularly changed, i.e., a first battery may be detached from a power tool and a second battery may be attached to the power tool. E.g., for a day, where the batteries are exchanged, only the combined information on usage of the power tool of both batteries may provide the necessary information on usage. An asset management platform may aggregate the usage information with the associated time information from a plurality of batteries to provide a complete usage history of the power tool. For a specific day, e.g., the first battery may have flagged the day without usage of the power tool. The power tool is used on this day only after the first battery has been exchanged with the second battery. The asset management system may conclude that there was a usage on this day, upon receiving the information on usage from the second battery.

A power tool system and an asset management platform is proposed, comprising: power tools configured to transfer a power tool identifier to an attached battery; batteries configured to generate usage information of a power tool and store the usage information of the power tool, the batteries are attached to; the batteries further configured to associate time information from a battery clock to the usage information of the power tool, the batteries are attached to and to transfer the usage information with the associated time information to an asset management platform; and the asset management platform configured to receive the usage information with the associated time information from the batteries and aggregate the received usage information with the associated time information of a plurality of the batteries.

Batteries can play an important role in a system to create a usage history of power tools on an asset management platform. Such a system may be established, if the power tools are able to communicate an identifier, e.g., a power tool identification number, to attached batteries and the batteries are configured to generate usage information of the power tools they are attached to. E.g., for a power tool which has no further communication capabilities than to transfer its identification number to a battery, the battery may determine usage by power consumption of the power tool from the battery. The battery may associate time information to the usage data of the power tool and may transfer the usage information with the associated time information to an asset management system, which is able to aggregate the usage information with the associated time information from a plurality of batteries. This allows to use a power tool without own computing capabilities for usage data, to be integrated in the system and to derive its usage history on an asset management platform. Other power tools with more computing and communication capabilities may also be used in such a system and may provide increasingly detailed information.

Batteries may be equipped with communication means with the power tools and communication means with the asset management platform. There may be a wired or a wireless communication module for communicating with the power tools, e.g., for receiving the identifier of the power tools. There may be a wired or wireless communication module for transferring the usage information with the associated time information directly or indirectly to the asset management system, e.g., the batteries may have a cellular connectivity for sending the usage information with the associated time information via a cellular network to the asset management platform.

The batteries may have a battery clock, particularly a real time clock, for associating time information to the usage information of the power tools. The battery clock may be reset or synchronized by the asset management platform or the receive time and time zone information from external sources.

The batteries may be equipped with a module to determine power consumption of an attached power tool or to determine discharging of the battery, to generate usage information of the attached power tool. E.g., the batteries may measure the current supplied to the attached power tool.

In an embodiment, the power tool system and the asset management platform are further comprising chargers configured to receive from the batteries the usage information with the associated time information, particularly, when the batteries are plugged to the chargers for charging, and to forward the usage information with the associated time information to the asset management platform via a wireless or wired connection.

Alternatively or additionally to communicating directly into a communications network, batteries may also transfer and receive information when plugged to a charger, particularly, for charging the batteries. The charger may be connected to a network, and information on usage of a power tool with an associated time stamp, stored on the batteries, may be transferred to the charger, and the charger may synchronously or asynchronously transfer the information on usage of a power tool with an associated time stamp via a communications network to an asset management platform.

A computer program product is proposed, comprising instructions which, when the program is executed by a computer, cause the computer to carry out the described method to create a usage history of a power tool on an asset management platform, particularly, with the described power tool system and asset management platform.

The various embodiments of the method to create a usage history of a power tool on an asset management platform may be combined with the disclosed power tool system and asset management platform, and/or the disclosed computer program product.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

### BRIEF DESCRIPTION OF THE DRAWINGS

Further embodiments, features and advantages of the present invention will become apparent from the subsequent description and dependent claims, taken in conjunction with the accompanying drawings, in which:
- Fig. 1: shows schematically a creation of a usage history of a power tool with a power tool system and an asset management platform;
- Fig. 2: shows schematically a creation of a usage history of a power tool with a power tool system and an asset management platform with missing data;
- Fig. 3: shows a schematic overview of components of a power tool system and an asset management system; and
- Fig. 4: shows in a flowchart a method to create a usage history of a power tool on an asset management platform.

In the Figures, like reference numerals designate like or functionally equivalent elements, unless otherwise indicated.

### DETAILED DESCRIPTION OF ILLUSTRATIVE EMBODIMENTS

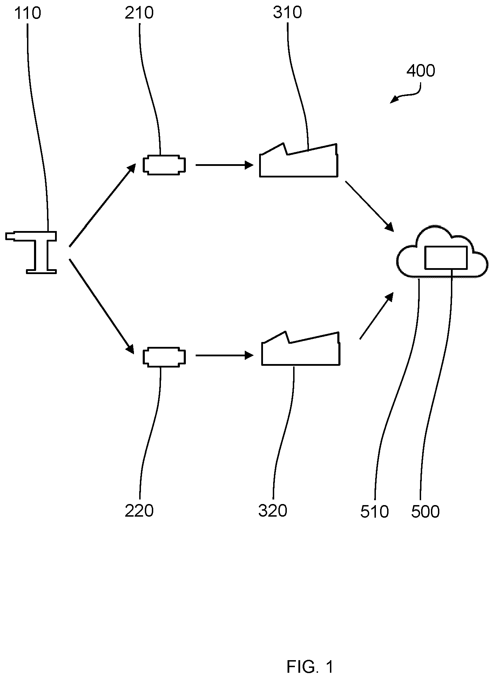

Fig. 1 shows schematically the creation of a usage history of a power tool 110 with a power tool system 400 and an asset management platform 500.

The batteries 210, 220 can store daily usage information of the last x days for power tools 110 they have been attached to, e.g., for 32 days, i.e., about 1 month. The batteries 210, 220 can mark the days where the power tool 110 has been used with the respective battery 210, 220. Days where the power tool 110 has not been used may be marked by the attached battery as not been used. The batteries 210, 220 may also use an unknown state for a power tool 110, e.g., if a battery 210, 220 does not know if the power tool 110 has been used or has not been used, as the power tool 110 may have been used with another battery 210, 220.

Batteries 210, 220 may be able to detect when they are attached to the power tool 110. On detecting an attaching event, the batteries 210, 220 may wake-up and record the time when they are attached to the power tool 110. Batteries 210, 220 may read the identification number of the attached power tool 110 and its usage data. Alternatively, the batteries 210, 220 may not read the identification number and the usage data of the attached power tool 110, when they are attached, however, the power tool 110 may write data to the batteries 210, 220, e.g., periodically or only after the power tool 110 is used. In both ways usage information is generated on the batteries 210, 220.

If the power tool 110 was previously detached from a battery 210, 220 and is attached to it again and the usage data has not changed in between, the battery 210, 220 may mark the power tool 110 as not used on days in between the previous detachment and the new attachment. If the usage data has changed, the battery 210, 220 may mark the power tool 110 as in an unknown state on days in between previous detachment and the new attachment, as it might not know on which days the power tool 110 has been used, e.g., because the power tool 110 does not have a reliable real time clock, thus the usage data of the power tool 110 may not be associated to a specific day. The daily usage information of the power tool 110 for the days with unknow status would be stored on another battery 210, 220, e.g., in the example of Fig. 1, the first battery 210 and the second battery 220 may be exchanged and the usage information will be distributed on the two batteries 210, 220.

A battery 210, 220 may mark all days between being attached to the power tool 110 and the first use of the power tool 110 as not used, because the battery 210, 220 was attached during this period and, e.g., no current was drawn from the battery 210, 220. Similarly, days for which the usage data of the power tool 110 has not changed in between may be marked as unused, relevant usage data may be, e.g., a value for the cumulative usage of the power tool 110. If a battery is detached and again attached to the power tool 110 and the cumulative usage, stored on the power tool 110 and transferred to the battery 210, 220, has not changed, no use has incurred in between detaching and attaching.

A battery 210, 220 may also detect when it is detached from the power tool 110. On detecting the detaching event, the battery 210, 220 may wake up to record the time when it is detached from the power tool 110, and it may update the daily usage information for this power tool 110, e.g., the battery 210, 220 may, to generate usage information and associate the usage information with time information, mark all days between the last use of the power tool and the detaching of the power tool 110 as not used.

First an example with only one first battery 210 is explained. The first battery 210 is attached to a power tool 110 for the first time sometime on day-x. The first battery 210 may mark the power tool 110 as not used on day-x. Preferably, the first battery 210 may mark the power tool 110 as having an unknown state on day-x, as the power tool 110 may have been used with another battery 210, 220 earlier on this day.

On day-x, the following information is accordingly stored on the first battery 210 for the power tool 110:

| | |
|---|---|
| Day-x | Power tool 110 has unknown state. |

On day-x+5 the power tool 110 is used the first time after attaching of the first battery 210. The first battery 220 marks the power tool 110 as not used from day-x+1 till day-x+4, as the first battery 210 can determine that the power tool 110 has not been used on these full days while the first battery 210 was still attached to it. The first battery 210 can further mark the power tool 110 as used on day-x+5.

On day-x+5, the following information is accordingly stored on the first battery 210 for the power tool 110, associating time information with usage information:

| | |
|---|---|
| Day-x | Power tool 110 has unknown state. |
| Day-x+1 | Power tool 110 is not used |
| Day-x+2 | Power tool 110 is not used |
| Day-x+3 | Power tool 110 is not used |
| Day-x+4 | Power tool 110 is not used |
| Day-x+5 | Power tool 110 is used. |

Sometime on day-x+10, the first battery 210 is detached from the power tool 110. On detecting the detaching event, the first battery 210 wakes up and marks the power tool 110 as not used on the days between its last usage and when it is detached, i.e., from day-x+6 till day-x+9. The first battery 210 may mark the power tool 110 as not used on day-x+10. Preferably, the first battery 210 marks the power tool 110 as having an unknown state on day-x+10, as the power tool 110 may still be used with the second battery 220 on the day-x+10.

On day-x+10, the following information is accordingly stored on the first battery 210 for the power tool 110:

| | |
|---|---|
| Day-x | Tool has unknown state. |
| Day-x+1 | Tool is not used |
| Day-x+2 | Tool is not used |
| Day-x+3 | Tool is not used |
| Day-x+4 | Tool is not used |
| Day-x+5 | Tool is used |
| Day-x+6 | Tool is not used |
| Day-x+7 | Tool is not used |
| Day-x+8 | Tool is not used |
| Day-x+9 | Tool is not used |
| Day-x+10 | Tool has unknown state. |

If the power tool 110 is used with a plurality of batteries 210, 220, e.g., the first battery 210 and the second battery 220, each of the batteries 210, 220 will store usage information, e.g., when power tool 110 was used, was not used, or has an unknown state. To derive the complete usage history for the power tool 110, an asset management platform 500, which may be hosted in a cloud 510, may aggregate the usage information with the associated time information stored on the plurality of batteries 210, 220, the power tool 110 has been used with. The usage information may be encoded when stored on the batteries 210, 220, e.g., unknown as -1, not used as 0, and used as 1, the associated time information, e.g., the date, may be encoded in international time formats, e.g., YYYY.MM.DD, with the year, the month and the day, when storing the daily usage of the power tool 110 on batteries 210, 220, and also for sending the usage information with the associated time information to an asset management platform 500.

In the example of Fig. 1 the two batteries 210, 220 may be attached and detached from the power tool 110 in the following sequence:
1. The first battery 210 is attached to the power tool 110 on day-x and detached on day-x+5
2. The second battery 220 is attached to the power tool 110 on day-x+5 and detached on day-x+10
3. The first battery 210 is attached to the power tool 110 again on day-x+10 and detached on day-x+12.

The batteries 210, 220 generate the usage information and store the usage information on a memory of the batteries 210, 220. The batteries 210, 220 associate time information with the usage information and thereby establish a daily usage log of the power tool 110.

The usage information stored on the batteries 210, 220, associated with the time information, is derived as described above in relation to one battery 210, 220. The usage information with the associated time information is transferred to the asset management platform 500, when the batteries 210, 220 are charged. The batteries 210, 220 communicate with the chargers 310, 320 and transfer stored usage information with associated time information to the charger 310, 320. The batteries 210, 220 may use a wired or a wireless communication with the chargers 310, 320, when the batteries are plugged to the chargers 310, 320 for charging. The chargers 310, 320 are connected to the asset management platform 500 via a communications network, e.g., via a cellular network. In the asset management platform 500, the latest received usage information from the batteries 210, 220 for the power tool 110 is aggregated with a previously created usage history of the power tool 110. For each day, the highest value for the state of unknown -1, not used 0, or used 1 is taken.

On day-x+10, the second battery 220 is charged on charger 320. Usage information with associated time information of the second battery 220 is transferred to the asset management platform 500 via the charger 320 and the asset management platform 500 determines that the power tool 110 has an unknown state on day-x+10. On day-x+12, the first battery 210 is charged on charger 310 and the usage information with the associated time information is transferred from the charger 310 to the asset management platform 500. The asset management platform 500 determines that the first battery 210 has a used state for the power tool 210 on day-x+10, while it had previously stored an unknown state. On receiving this new usage information for the day-x+10, the asset management platform 500 changes its created usage history for the power tool 110, and stores that the power tool 110 was used on day-x+10. Similarly, on day-x+8, the first battery 210 may have an unknown state for the usage of the power tool 110 and the second battery 220 may indicate that the power tool 110 was not used. With usage information and associated time information from both batteries 210, 220, the asset management platform 500 determines that the power tool 110 was not used on day-x+8.

Table 1-1: stored usage information on first battery 210 stored on a day/for a day; Table 1-2: stored usage information on second battery 220 on day/for day; and Table 1-3: aggregated usage information on asset management platform 500 aggregated on a day (with source)/for a day, show the complete usage information associated with time information for specific days on the first battery 210, the second battery 220 and the asset management system 500.

**Table 1-1: stored usage information on first battery 210 on day/for day**

| For day | **on day x** | **on day x+5** | **on day x+10** | **on day x+12** |
|---|---|---|---|---|
| day x | used | used | used | used |
| day x+1 | | not used | not used | not used |
| day x+2 | | not used | not used | not used |
| day x+3 | | not used | not used | not used |
| day x+4 | | not used | not used | not used |
| day x+5 | | unknown | unknown | unknown |
| day x+6 | | | unknown | unknown |
| day x+7 | | | unknown | unknown |
| day x+8 | | | unknown | unknown |
| day x+9 | | | unknown | unknown |
| day x+10 | | | used | used |
| day x+11 | | | | not used |
| day x+12 | | | | unknown |

**Table 1-2: stored usage information on second battery 220 on day/for day**

| For day | **on day x+5** | **on day x+10** |
|---|---|---|
| day x+5 | used | used |
| day x+6 | | not used |
| day x+7 | | not used |
| day x+8 | | not used |
| day x+9 | | not used |
| day x+10 | | unknown |

**Table 1-3: aggregated usage information on asset management platform 500 on day (with source)/for day**

| For day | **on day x+10** | **on day x+12** |
|---|---|---|
| day x | | used (first battery) |
| day x+1 | | not used (first battery) |
| day x+2 | | not used (first battery) |
| day x+3 | | not used (first battery) |
| day x+4 | | not used (first battery) |
| day x+5 | used (second battery) | used (second battery) |
| day x+6 | not used (second battery) | not used (second battery) |
| day x+7 | not used (second battery) | not used (second battery) |
| day x+8 | not used (second battery) | not used (second battery) |
| day x+9 | not used (second battery) | not used (second battery) |
| day x+10 | unknown (second battery) | used (first battery) |
| day x+11 | | not used (first battery) |
| day x+12 | | unknown (first battery) |

Batteries 210, 220 may periodically wake up and update the usage information for the attached power tool 110. E.g., batteries 210, 220 can wake up once a day, and if the attached power tool 110 has not been used for a full day, the batteries 210, 220 will store that the attached power tool 110 has not been used on the last full day. After completing the data processing for generating the usage information, storing the usage information and associating the time information, the battery 210, 220 may go back to a sleep mode. Such a process may be useful if the battery 210, 220 can send its data to the asset management platform 500, while still being attached to the power tool 110, e.g., by using cellular connectivity or by using local connectivity such as Wi-Fi or Bluetooth via other gateways or smartphones.

A battery 210, 220 may also wake up the attached power tool 110 to read the usage data of the power tool 110, thus generating usage information of the power tool 110 on the battery 210, 220. E.g., the battery 21, 220 may read the cumulative usage data from the attached power tool 110 daily and if there has been no change in the cumulative usage value since the last read out, the battery 210, 220 can mark that its attached power tool 110 has not been used on the last full day. Also, a power tool 110 may wake up its attached battery 210, 220 and write usage data, e.g., its cumulative usage data on the battery 210, 220, thus generating usage information of the power tool 110 on the battery 210, 220.

Batteries 210, 220 may also determine how long a power tool 110 has been used with the batteries 210, 220 per day to create a daily usage intensity history. There are various ways how the batteries can determine how long the attached power tool 110 has been used.

E.g., the power tool 110 writes its latest cumulative usage data to the attached battery 210, 220, e.g., after waking up or after a trigger release. With a real time clock and with time-zone information, the battery 210, 220 determines first cumulative usage data and last cumulative usage data in a day and calculates the usage intensity per day. Batteries 210, 220 may also determine if the attached power tool 110 has not been used on the day. There are various other way to deduct by battery 210, 220 how long the attached tool 110 is used per day, based on communications between the battery 210, 220 and the power tool 110.

Alternatively, a battery 210, 220 may also deduct how long the attached power tool 110 is used per day, based on electronics of the battery 210, 220, e.g., using the real time clock and the time-zone information and how long a current discharge was above a certain threshold on that day.

In the following creating a usage history of a power tool comprising usage intensity is described with one battery. A battery 210, 220 is attached to a power tool 110 for the first time sometime on day-x. The power tool 110 is used on day-x for a time-interval x1. The battery 210, 220 associates the usage for the time-interval x1 with day-x. Preferably, the battery 210, 22 marks the power tool 110 as having incomplete data on day-x as the power tool 110 may have been used with another battery 210, 220 earlier on the day-x.

On the day-x, the following information is accordingly stored on the battery 210, 220 for the power tool 110.

| | |
|---|---|
| Day-x | x1 (incomplete) |

The tool is used again on day-x+5 for a time-interval x2. The battery 210, 220 associates the day-x+5 with the usage information that the power tool 110 has been used for time-interval x2. The battery 210, 220 may mark the power tool 110 as not used or used for time-interval 0 on the days in between, i.e., from day-x+1 to day-x+4, as the battery 210, 220 can generate the usage information that the power tool 110 has not been used on these full days while the power tool 110 was attached with the battery 210, 220 during this period.

On day-x+5, the following information is accordingly stored on the battery 210, 220 for the power tool 110.

| | |
|---|---|
| Day-x | x1 (incomplete) |
| Day-x+1 | 0 |
| Day-x+2 | 0 |
| Day-x+3 | 0 |
| Day-x+4 | 0 |
| Day-x+5 | x2 |

The power tool 110 is used again on day-x+10 for a time-interval x3 and the battery 210, 220 is detached from this tool. On detecting this detachment event, the battery 210, 220 wakes up and marks the power tool 110 as not used, or used for time-interval 0, on the days between its last usage and when the battery 210, 220 is detached, i.e., from day-x+6 till day-x+9. The battery may mark the power tool 110 as used for time-interval x3 on day-x+10. Preferably, the battery 210 marks the power tool 110 as having an incomplete data on day-x+10 as the power tool may still be used with another battery on this day.

On day-x+10, the following information is accordingly stored on the battery 210, 220 for the power tool 110.

| | |
|---|---|
| Day-x | x1 (incomplete) |
| Day-x+1 | 0 |
| Day-x+2 | 0 |
| Day-x+3 | 0 |
| Day-x+4 | 0 |
| Day-x+5 | x2 |
| Day-x+6 | 0 |
| Day-x+7 | 0 |
| Day-x+8 | 0 |
| Day-x+9 | 0 |
| Day-x+10 x3 | (incomplete) |

Referring again to Fig. 1, a plurality of batteries 210, 220 may be used in a power tool system 400. In an example, we may have the following sequence of two batteries 210, 220, which are attached and detached from a power tool 110:
1. The first battery 210 is attached to the power tool 110 on day-x and detached on day-x+5
2. The second battery 220 is attached to the power tool 110 on day-x+5 and detached on day-x+10.
3. The first battery 210 is attached to the power tool again on day-x+10 and detached on day-x+12.

The usage information is generated as described for a single battery 210, 220. The usage information is stored on the batteries 210, 220 and associated with time information. The usage information with the associated time information, e.g., a daily usage intensity history calculated on the batteries 210, 220, is sent to the asset management platform 500, when the batteries 210, 220 are charged. In the asset management platform 500, the latest received information is aggregated with a previously created usage intensity, i.e., the aggregated daily usage intensity log of the power tool 110. the asset management platform 500, aggregates for each day, the latest daily usage intensity for the power tool 110 as stored on all batteries 210, 220 the power tool 110 has been attached to, to calculate a total usage intensity on that day. For example, on day-x, the power tool 110 is only used with the first battery 210 for 40 minutes. On day-x+10, the power tool 110 is used with the first battery 210 for 50 minutes and with the second battery 220 for 20 minutes. On receiving data from both batteries 210, 220 the asset management platform 500 can determine that the power tool 110 was used on day-x+10 for 70 minutes.

Table 2-1: stored usage information on first battery 210 stored on a day/for a day; Table 2-2: stored usage information on second battery 220 on day/for day; and Table 2-3: aggregated usage information on asset management platform 500 aggregated on a day (with source)/for a day, show the complete usage information associated with time information for specific days on the first battery 210, the second battery 220 and the asset management system 500. The usage information is not only used, not used, or unknown; however, comprises a cumulative use on a day, as generated by the first and/or second battery 210, 220.

**Table 2-1: stored usage information on first battery 210 on day/for day**

| For day | **on day x/min** | **on day x+5/min** | **on day x+10/min** | **on day x+12/min** |
|---|---|---|---|---|
| day x | 40 | 40 | 40 | 40 |
| day x+1 | | 0 | 0 | 0 |
| day x+2 | | 0 | 0 | 0 |
| day x+3 | | 0 | 0 | 0 |
| day x+4 | | 0 | 0 | 0 |
| day x+5 | | 20 | 20 | 20 |
| day x+6 | | | unknown | unknown |
| day x+7 | | | unknown | unknown |
| day x+8 | | | unknown | unknown |
| day x+9 | | | unknown | unknown |
| day x+10 | | | 20 | 20 |
| day x+11 | | | | 0 |
| day x+12 | | | | 10 |

**Table 2-2: stored usage information on second battery 220 on day/for day**

| For day | **on day x+5/min** | **on day x+10/min** |
|---|---|---|
| day x+5 | 10 | 10 |
| day x+6 | | 0 |
| day x+7 | | 0 |
| day x+8 | | 0 |
| day x+9 | | 0 |
| day x+10 | | 50 |

**Table 2-3: aggregated usage information on asset management platform 500 on day (with source)/for day**

| For day | **on day x+10/min** | **on day x+12/min** |
|---|---|---|
| day x | | 40 (first battery) |
| day x+1 | | 0 (first battery) |
| day x+2 | | 0 (first battery) |
| day x+3 | | 0 (first battery) |
| day x+4 | | 0 (first battery) |
| day x+5 | 10 (second battery) | 30 (first and second battery) |
| day x+6 | 0 (second battery) | 0 (second battery) |
| day x+7 | 0 (second battery) | 0 (second battery) |
| day x+8 | 0 (second battery) | 0 (second battery) |
| day x+9 | 0 (second battery) | 0 (second battery) |
| day x+10 | 50 (second battery) | 70 (first and second battery) |
| day x+11 | | 0 (first battery) |
| day x+12 | | 10 (first battery) |

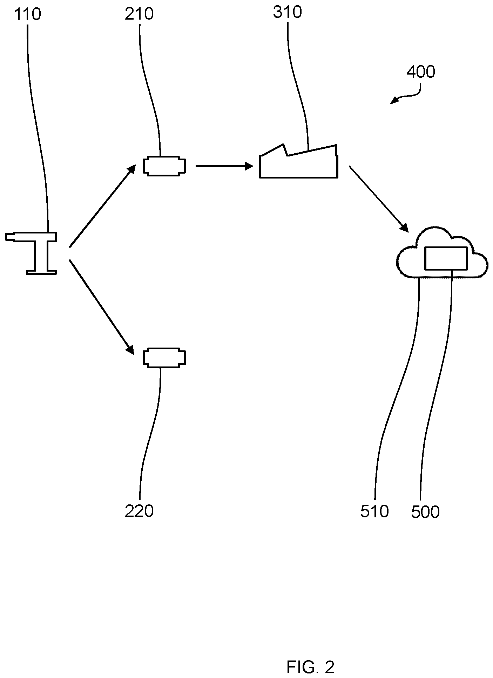

Fig. 2 shows a creation of a usage history of a power tool 110 with a power tool system 400 and an asset management platform 500 with missing usage data and how this may be supported with data on cumulative usage. Batteries 210, 220 may also store cumulative usage data of the power tool 110 in the usage information for the power tool 110 in a battery storage. E.g., the power tool 110 can write its cumulative usage data to an attached battery 210, 220 and the battery 210, 220 can generate usage information comprising the usage data, e.g. in a daily usage intensity history.

For example, the cumulative usage data on a first battery 210 on day-x+12 is 150 minutes. If only the first battery 210 is charged and a second battery 220 is not charged, only the usage information from the first battery 210, comprising the cumulative usage data of the power tool 110, will be transferred to the asset management platform 500. The asset management platform 500 may determine from an available usage history for the power tool 110, which is based only on usage information from the first battery 210, together with the newly received information that the sum of daily usage intensity of the power tool 110 is 90 minutes. As the 90 minutes are lower than the cumulative usage of 150 minutes, received from the power tool 110, the asset management platform 500 may determine that some information in the daily usage intensity history is missing. Batteries 210, 220 may store cumulative usage data of a power tool 110 per day in the usage information associated with time information, e.g., as a daily usage intensity history together with along with time stamps of attachment or detachment from the power tool 110. Using this information, the asset management platform 500 may determine a time period where usage information is missing and how much the power tool 110 was used during that time period. In the discussed example, it can be determined that the power tool was used for 60 minutes between day-x+5 and day-x+10 for which daily usage intensity data is missing.

Table 3-1: stored usage information on first battery 210 stored on a day/for a day; Table 3-2: stored usage information on second battery 220 on day/for day; and Table 3-3: aggregated usage information on asset management platform 500 aggregated on a day (with source)/for a day, show the available usage information associated with time information for specific days on the first battery 210, the second battery 220 and the asset management system 500. The usage information is not only used, not used, or unknown; however, comprises a cumulative use on a day, as generated by the first and/or second battery 210, 220, and additionally a total cumulative usage, e.g., generated from total usage data of the power tool 110, stored on the power tool 110 and transferred to the batteries 210, 220.

**Table 3-1: stored usage information on first battery 210 on day/for day**

| For day | **on day x** on day and cumulative/min | | **on day x+5** on day and cumulative/min | | **on day x+10** on day and cumulative/min | | **on day x+12** on day and cumulative/min | |
|---|---|---|---|---|---|---|---|---|
| day x | 40 | 40 | 40 | 40 | 40 | 40 | 40 | 40 |
| day x+1 | | | 0 | 40 | 0 | 40 | 0 | 40 |
| day x+2 | | | 0 | 40 | 0 | 40 | 0 | 40 |
| day x+3 | | | 0 | 40 | 0 | 40 | 0 | 40 |
| day x+4 | | | 0 | 40 | 0 | 40 | 0 | 40 |
| day x+5 | | | 20 | 60 | 20 | 60 | 20 | 60 |
| day x+6 | | | | | unknown | | unknown | |
| day x+7 | | | | | unknown | | unknown | |
| day x+8 | | | | | unknown | | unknown | |
| day x+9 | | | | | unknown | | unknown | |
| day x+10 | | | | | 20 | 140 | 20 | 140 |
| day x+11 | | | | | | | 0 | 140 |
| day x+12 | | | | | | | 10 | 150 |

**Table 3-2: stored usage information on second battery 220 on day/for day**

| For day | **on day x+5** on day and cumulative/min | | **on day x+10** on day and cumulative/min | |
|---|---|---|---|---|
| day x+5 | 10 | 70 | 10 | 70 |
| day x+6 | | | 0 | 70 |
| day x+7 | | | 0 | 70 |
| day x+8 | | | 0 | 70 |
| day x+9 | | | 0 | 70 |
| day x+10 | | | 50 | 120 |

**Table 3-3: aggregated usage information on asset management platform 500 on day (with source)/for day, as battery 220 has not been charged yet and has not transferred data via a wireless connection only the data from battery 210 is available.**

| For day | **on day x+12** on day and cumulative/min | |
|---|---|---|
| day x | 40 | 40 (first battery) |
| day x+1 | 0 | 40 (first battery) |
| day x+2 | 0 | 40 (first battery) |
| day x+3 | 0 | 40 (first battery) |
| day x+4 | 0 | 40 (first battery) |
| day x+5 | 20 | 60 (first battery) |
| day x+6 | unknown | |
| day x+7 | unknown | |
| day x+8 | unknown | |
| day x+9 | | unknown |
| day x+10 | 20 | 140 (first battery) |
| day x+11 | 0 | 140 (first battery) |
| day x+12 | 10 | 150 (first battery) |

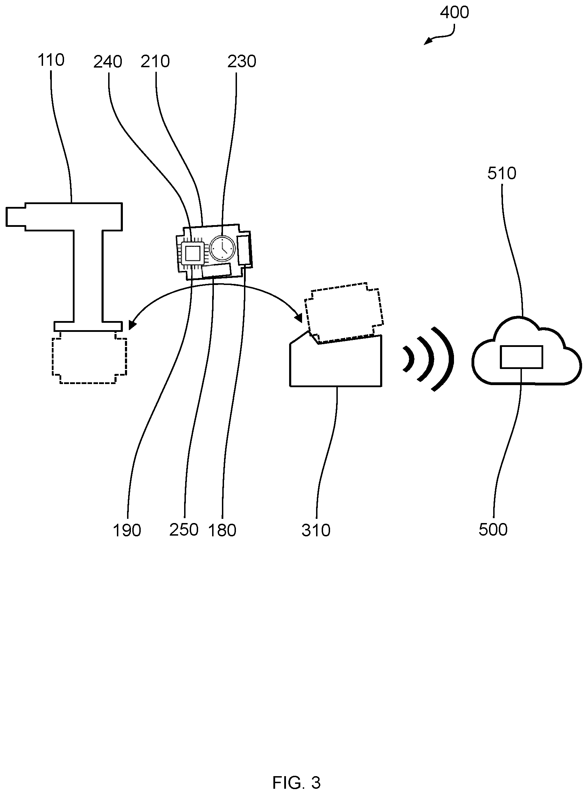

Fig. 3 shows a schematic overview of components of a power tool system 400 in an embodiment with a power tool 110, a battery 210, and a charger 310 and an asset management system 500. The power tool 110 may be, e.g., a saw, a driver, a wrench, a rotary hammer, a drill, or a screwdriver. The battery 210 can be attached to the power tool 110 to supply the power tool 110 with electrical power. The battery 210 can be attached to the charger 310 to be recharged by the charger 310. The battery 210 is a rechargeable battery 210.The power tool system 400 may comprise one or more of similar or different power tools 110, one or more similar or different batteries 210 which can be attached exchangeable to the power tools 110 and which may be attached for charging to one or more chargers 310 of the power tool system 400. The battery 210 comprises a real time clock 230. The real time clock 230 can be synchronized with information from the charger 310, e.g., the charger 310 may transfer the current time and/or the current time zone, in which the charger 310 is situated, to the real time clock 230 of the battery 210. The charger 310 may receive the synchronization information from an asset management system 500, e.g., implemented via a cloud 510. The charger 310 may be connected by wireless or wired connection to the asset management system 500. When the battery 210 is detachably attached to the power tool 110, the battery 210 can receive usage data from the power tool 110. The battery 210 can generate usage information from the usage data with a battery processor 240 and store the usage information on a battery storage 250. The battery can associate the usage information with time information from the real time clock 230. The usage information with the associated time information can later be transferred to the charger 310, e.g., when the battery 210 is attached to the charger 310. The charger 310 can transfer the usage information with the associated time information to the asset management system 500 by the wireless or wired connection.

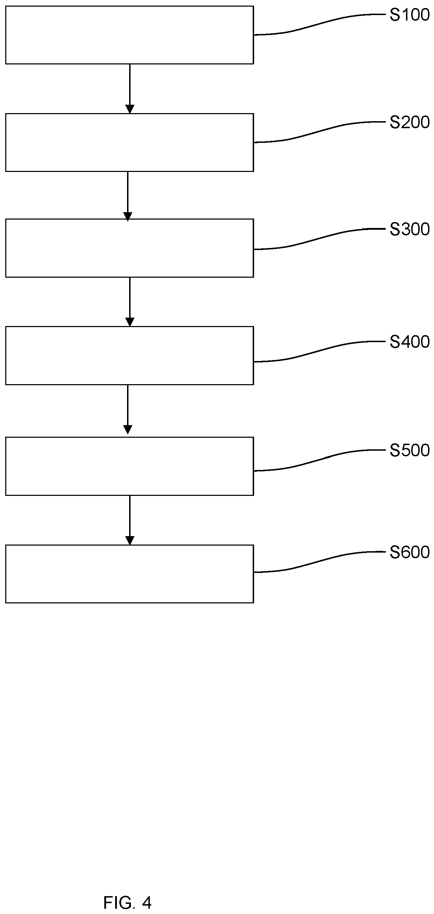

Fig. 4 shows in a flowchart a method to create a usage history of a power tool 110 on an asset management platform 500. In step S100, a first battery 210 is attached to the power tool 110. Batteries 210, 220 are regularly attached to cordless power tools 110, to supply the power tools 110 and the batteries 210, 220 are regularly exchanged for recharging.

In step S200, usage information of the power tool 110 is generated on the first battery. Generating S200 usage information of the power tool 110 on the first battery 210 may comprise transferring usage data from the power tool 110 to the first battery 210. The transfer may be done via a wireless or a wired connection between the first battery 210 and the power tool 110. The first battery 210 may read from a memory of the power tool 110 and/or the power tool 110 may write on a memory of the first battery 210. Alternatively, the usage information of the power tool 110 may be generated on the first battery 210 by evaluating a discharge of the first battery by the power tool and/or a current supplied to the power tool. This may be done, e.g., with a current measurement. The usage information may also comprise an identifier of the power tool 110, e.g., an identification number. The asset management platform 500 may use the identifier to relate usage information to a specific power tool 110.

In step S300, the usage information of the power tool 110 is stored on the first battery 210. The first battery comprises a battery storage 250 for storing the usage information. The battery storage 250 may also serve as memory for the power tool 110 to write data to the first battery 210.

In step S400, time information from a battery clock 230 is associated to the usage information of the power tool 110, i.e., the usage information is related to a time. The time information may be supplied by a real time clock 230 of the first battery 210 and may comprise time zone information.

In step S500, the usage information with the associated time information from the first battery 210 is transferred to the asset management platform 500. The transfer of the usage information with the associated time information may comprise transferring the usage information with the associated time information by wireless connectivity, in particular cellular connectivity, of the first battery 210. Alternatively or additionally, transferring the usage information with the associated time information from the first battery 210 to the asset management platform 500 may comprise transferring the usage information with the associated time information to a charger 310, 320 and transferring the usage information with the associated time information from the charger 310, 320 to the asset management platform 500.

In step S600, on the asset management platform 500 the usage information with the associated time information from the first battery 210 is aggregated with usage information with associated time information from a second battery 220.

### REFERENCE NUMERALS

- 110: power tool
- 210: first battery
- 220: second battery
- 230: real time clock
- 240: battery processor
- 250: battery storage
- 310: first charger
- 320: second charger
- 400: power tool system
- 500: asset management platform
- 510: cloud

- S100: attaching a battery to a power tool
- S200: generating usage information on a battery
- S300: storing usage information on a battery
- S400: associating time information to the usage information
- S500: transferring usage information from a battery to an asset management platform
- S600: aggregating usage information from batteries on an asset management platform

## Claims

1. A method to create a usage history of a power tool (110) on an asset management platform (500), comprising the steps of:
- attaching (S100) a first battery (210) to the power tool (110);
- generating (S200) usage information of the power tool (110) on the first battery (210);
- storing (S300) the usage information of the power tool (110) on the first battery (210);
- associating (S400) time information from a battery clock (230) to the usage information of the power tool (110); and
- transferring (S500) the usage information with the associated time information from the first battery (210) to the asset management platform (500).

2. The method according to claim 1, wherein generating (S100) the usage information of the power tool (110) on the first battery (210) is comprising transferring usage data from the power tool (110) to the first battery (210).

3. The method according to claim 1 or 2, wherein generating (S200) the usage information of the power tool (110) on the first battery (210) is comprising evaluating a discharge of the first battery (210) by the power tool (110) and/or a current supplied to the power tool (110).

4. The method according to any of the claims 1 to 3, wherein the battery clock (230) is a real time clock (230) and/or wherein the first battery (210) has time zone information.

5. The method according to any of the claims 1 to 4, wherein transferring (S500) the usage information with the associated time information from the first battery (210) to the asset management platform (500) is comprising transferring the usage information with the associated time information by wireless connectivity, in particular cellular connectivity, of the first battery (210).

6. The method according to any of the claims 1 to 5, wherein transferring (S500) the usage information with the associated time information from the first battery (210) to the asset management platform (500) is comprising transferring the usage information with the associated time information to a charger (310, 320).

7. The method according to claim 6, wherein transferring (S500) the usage information with the associated time information from the first battery (210) to the asset management platform (500) is comprising the steps:
- detaching the first battery (210) from the power tool (110);
- plugging the first battery (210) to a charger (310, 320) for charging;
- transferring the usage information with the associated time information via a wireless or wired connection between the first battery (210) and charger (310, 320) to which the first battery (210) is plugged; and
- forwarding the usage information with the associated time information via a wireless or wired connection from the charger (310, 320) to the asset management platform (500).

8. The method according to any of the claims 1 to 7, wherein the usage information with the associated time information is comprising information on usage and/or non-usage of the power tool (110) on one or more specific days, a period of usage on one or more specific days, and/or a cumulative usage on one or more specific days.

9. The method according to any of the claims 1 to 8, wherein the first battery (210) associates time information to each generated usage information, to the usage information of one day, and/or wherein the time information comprises information on a beginning of a use of the power tool (110), a stop of the use of the power tool (110), and/or a duration of the use of the power tool (110).

10. The method according to any of the claims 1 to 9, further comprising the step of aggregating (S600) on the asset management platform (500) the usage information with the associated time information from the first battery (210) with usage information with associated time information from a second battery (210).

11. A power tool system and an asset management platform (500) comprising:
- power tools (110) configured to transfer a power tool identifier to an attached battery;
- batteries (210, 220) configured to
- generate usage information of a power tool (110) and store the usage information of the power tool (110), the batteries (210, 220) are attached to;
the batteries (210, 220) further configured to
- associate time information from a battery clock (230) to the usage information of the power tool (110), the batteries (210, 220) are attached to; and
- transfer the usage information with the associated time information to an asset management platform (500); and
- the asset management platform (500) configured to receive the usage information with the associated time information from the batteries (210, 220) and aggregate the received usage information with the associated time information of a plurality of the batteries (210, 220).

12. The power tool system and the asset management platform (500) according to claim 11, further comprising chargers (310, 320) configured to receive from the batteries (210, 220) the usage information with the associated time information, particularly, when the batteries (210, 220) are plugged to the chargers (310, 320) for charging, and to forward the usage information with the associated time information to the asset management platform (500) via a wireless or wired connection.

13. A computer program product comprising instructions which, when the program is executed by a computer, cause the computer to carry out the method of one of claims 1 to 10 with the system according to claim 11 or 12.
